# EUROPEAN PATENT APPLICATION

(11) **EP 3 243 773 A1**
(43) Date of publication of application: **15.11.2017**
(21) Application number: 17176259.4
(22) Date of filing: 02.07.2013
(51) Int. Cl.: B65G 69/18, B65D 88/30, B65D 90/58, B65G 47/19, B65G 65/40, B65D 90/60

(54) **SUPPORT APPARATUS FOR MOVING PROPPANT FROM A CONTAINER IN A PROPPANT DISCHARGE SYSTEM**

(30) Priority: 23.07.2012 US 201213555635; 27.09.2012 US 201213628702; 25.10.2012 US 201213660840; 25.10.2012 US 201213660870; 25.10.2012 US 201213660855; 15.02.2013 US 201313768962
(62) Divisional of application: 13823352.3
(71) Applicant: OREN TECHNOLOGIES, LLC, Houston, TX 77073 (US)
(72) Inventor: OREN, John, Houston, TX Texas 77205 (US); OREN, Joshua, Houston, TX Texas 77205 (US)
(74) Representative: HGF Limited

(57) **Abstract**

An apparatus for moving proppant from a container (10) has a frame (62) with a surface for suitable for receiving a container (10) thereon, a hopper (84) affixed to the frame (62), and a conveyor (86) having a surface positioned below the hopper (84). The hopper (84) has an opening at or adjacent to a lower end thereof. The hopper (84) is suitable for receiving proppant from the container (10). The surface of the conveyor (86) is suitable for receiving the proppant as discharged through the opening of the hopper (84). A receptacle (76) is translatably positioned at the surface of the frame (62). A metering gate (90) is translatably positioned adjacent to the opening of the hopper (84).

## Description

### FIELD OF THE INVENTION

The present invention relates to proppant discharge system wherein proppant can be discharged from a storage container. Additionally, the present invention the relates to support apparatus for maintaining the container in a desired location during the discharging ofproppant from the container. Additionally, the present invention relates to conveying systems whereby the proppant can be discharged from a container and conveyed to a location remote from the container.

### BACKGROUND OF THE INVENTION

Hydraulic fracturing is the propagation of fractions in a rock layer caused by the presence of pressurized fluid. Hydraulic fractures may form naturally, in the case of veins or dikes, or may be man-made in order to release petroleum, natural gas, coal seam gas, or other substances for extraction. Fracturing is done from a wellbore drilled into reservoir rock formations. The energy from the injection of a highly-pressurized tracking fluid creates new channels in the rock which can increase the extraction rates and ultimate recovery of fossil fuels. The fracture width is typically maintained after the injection by introducing a proppant into the injected fluid. Proppant is a material, such as grains of sand, ceramic, or other particulates, that prevent the fractures from closing when the injection is stopped.

With the rise of hydraulic fracturing over the past decade, there is a steep climb in proppant demand. Global supplies are currently tight. The number of proppant suppliers worldwide has increased since 2000 from a handful to well over fifty sand, ceramic proppant and resin-coat producers.

By the far the dominant proppant is silica sand, made up of ancient weathered quartz, the most common mineral in the Earth's continental crust. Unalike common sand, which often feels gritty w hen rubbed between the fingers, sand used as a proppant tends to roll to the touch as a result of its round, spherical shape and tightly-graded particle distribution. Sand quality is a function of both deposit and processing. Grain size is critical, as any given proppant must reliably fell within certain mesh ranges, subject to downhole conditions and completion design. Generally, coarser proppant allows the higher flow capacity due to the larger pore spaces between grains. However, it may break down or crush more readily under stress due to the relatively fewer grain-to-grain contact points to bear the stress often incurred in deep oil- and gas-bearing formations.

Typically, in any hydraulic fracturing operation, a large amount of such proppant is required. Typically, it has been difficult to effectively store the proppant at the fracturing sites. Additionally, it has been found to be rather difficult to effectively transport the proppant to the desired location. Often, proppant is hauled to the desired locations on the back of trucks and is dumped onsite. Under such circumstances, the proppant is often exposed to adverse weather conditions. This will effectively degrade the quality of the proppant during its storage. Additionally, the maintenance of proppant in containers at the hydraulic fracturing site requires a large capital investment in storage facilities. Typically, the unloading of such storage facilities is carried out on a facility-by-facility basis. As such, there is a need to be able to effectively transport the proppant to and store the proppant in a desired location adjacent to the hydraulic fracturing location.

With the development and acceptance of the well stimulation methodology known as "hydraulic fracturing", a unique logistics challenge has been created in delivering the massive quantities of proppant from domestic sand mines to the wellhead. This logistics challenge affects every stakeholder up-and-down the logistics chain. In particular, this includes sand mine owners, railroads, trans-loading facilities, oil-field service companies, trucking companies and exploration and production companies. The existing method of delivering sand to the consumer requires the use of expensive specialized equipment and a high level of coordination. This makes the process subject to a myriad of problems that disrupt the efficient flow of proppant to the wellhead. The result of utilizing the current method is the expenditure of hundreds of millions of dollars in largely unnecessary logistics costs.

Sand mines are being rapidly developed all over the United States to satisfy the demand that the "Shale Boom" has created for proppant. Most of the recent mines that have come on-line, or are in varying stages of development, have limited transportation infrastructure to support the export of sand from the sand-pit. As a result, many mines are building rail-spurs that will accommodate up to 100 rail cars or more that can be loaded and staged for transportation to the designated destination. Along with rail-track, these companies are also investing in expensive vertical silo storage facilities to store thousands of tons of proppant. The sand mines are unable to effectively ship proppant to the shale regions without equal fluid trans-loadimg and storage facilities on the receiving end of the logistics chain. This results in lost revenue and productivity for the mine owner and higher prices for proppant buyers in the destination region.

Railrads are a critical part of the logistics chain required to move proppant from mine to the various shale regions. Due to the lack of rail track and trans-loading facilities in some of these remote regions, the railroad companies must be selective of their customers' delivery locations, and make sure that their customers have the ability to efficiently off-load rail cars. Recently, the railroads have seen the allocated fleet of hopper cars being stranded at those destination where there is no cost-affective storage option to efficiently off-load those cars. Consequently, there has been a significant opportunity cost that the railroads have been forced to pay, As such, a need has developed for facilitating the ability to quickly and inexpensively off-load proppant from rail cars so as to enable the railroads to improve the velocity, turn-around and revenue-generating capacity of the rail-car fleet.

Limited storage at trans-loading facilities has severely limited many of the current facilities ability to operate efficiently. Most trans-load facilities are forced to off-load rail hopper cars by bringing in trucks (i.e. pneumatics) along the rail siding, and conveying sand directly from rail to truck. This requires an intense coordination effort on the part of the trans-loader as well as the trucking community. Long truck lines are commonplace, and demurrage fees (i.e. waiting time charged by trucking companies) amount to hundreds of millions of dollars nationwide. Assuch, the trans-loader is not able to fully realize the utilization of conveying and other material handling equipment. The throughput of these trans-loading terminals severely reduces costing of the terminal meaningful revenue.

Additionally, optimal trans-load terminal locations are immobile and not able to move from one area of the shale pay to another. Investors in immobile silo and flat storage facilities can see the utilization and value of those investments tumble. A potential loss of the investment in such immobile silos can often scare investment capital away from these types of future projects so as to further exacerbate the logistics chain problem. As such, a need has developed for a portable, inexpensive storage and delivery solution for proppant that would help revive the capital needed to improve the facilities and maximize the revenue-generating potential of existing and new trans-load and storage facilities.

The lack of efficient trans-load and storage facilities in shale regions have taken a heavy toll on the efficiencies of trucking fleets. While trucking companies have typically charged demurrage fees to compensate for the waiting time and lost productivity, those types of charges are under significant resistance from the customer base. When trucking companies are required to wait in line to be loaded, or wait at a well-site to be unloaded, the number of turns that the equipment can make in a day is severely limited. Rather than turning two or three loads in a single day, the trucks more typically make one trip per day, and very commonly may make one delivery every two or three days. This lack of efficient fleet utilization results in the trucking company having to buy more equipment and hire more drivers to move the same amount of material than would be necessary. As such, it would be desirable to eliminate demurrage charges and to present the opportunity for trucking companies to become more profitable while making smaller investments in equipment.

Service companies (such as fracturing companies) are held captive by the current proppant delivery process. This is the result of inefficient trans-load facilities and pneumatic (bulk) truck deliveries. The service company cannot frac a well if it does not have a supply of proppant. It is widely known that the problems surrounding the efficient delivery of proppant to the well-site is one of the primary challenges to the service companies in successfully completing a frac job. Pressure pumps, coiled tubing and other well stimulation equipment, often site idle due to the lack of required proppant at the well-site. "Screening-Out" or running out of proppant is very common at well locations due to the lack of control over what is happening up-stream in the proppant logistics chain, This results in lower profit margins to the service company. Many small to medium-sized hydraulic fracturing companies have little or no logistics infrastructure. Some have entered the marketplace without much thought to the logistics problems associated with taking delivery of the necessary supplies to complete a well. In doing so, many of these companies have been forced to source material and employ very expensive logistics options in order to survive. This has resulted in above-market pricing in order to complete wells. There is also a risk of losing out on otherwise viable hydraulic fracturing contracts. As such, there is a need to lower costs across the board in order to properly compete.

Exploration and production companies, along with the entire U.S. population, pay the ultimate bill for all of the inefficiencies and waste that plagues the proppant supply chain. Service companies are forced to price hydraulic fracturing services by taking into account the historical costs of supply chain problems. Exploration and production companies need to pass on the overall increased cost of production. As such, there is a need to provide a cost-effecttve solution to improve the profitability of stake holders in the proppant logistics chain, while lowering the overall cost to the consumer.

U.S. Patent Application Serial No. 13/427,140, filed on March 22, 2012 by the present inventor, describes a system for the delivery of proppant between a loading station and the well site. This application describes the steps of placing the storage container in a location adjacent to a train site such that the proppant, as delivered by the train, can be discharged into the container. The container can then be transported for storage in stacks at the loading area or can be delivered to a tilting mechanism at the loading station. The tilting station will tilt the container so as to allow the proppant to flow outwardly therefrom. This proppant will flow, by a conveyor, to a pneumatic truck. The truck can then transport the proppant over the highways to the well site. At the well site, the proppant from the pneumatic truck can then be discharged into a twenty foot container at the well site. These twenty foot containers can be stored at the well site in a stacked configuration. Ultimately, each of the containers can be transported to another tilting mechanism at the well site so that the proppant within each of the storage containers can be discharged onto a Conveyor and ultimately for use during the fracturing operation.

In this U.S. Patent Application Serial No. 13/427,140, the twenty-foot ISO container that is utilized is one of the most inexpensive and readily-available pieces of transportation equipment in the world. It was determined that the use of the twenty-foot container allows for the transportation of proppant through various minor modifications to the internal walls and reinforcements of the twenty-foot ISO container. The available capacity is more than acceptable. It was determined that this modified twenty-foot container could hold in excess of forty-five tons of proppant. The cost of an unmodified twenty-foot ISO container is less than four thousand dollars. This makes it very affordable compared to the cost of building vertical silos or flat storage buildings.

The twenty-foot ISO container was modified by cutting a hole in the top of the container and constructing a water-tight, hinged hatch through which the proppant could be poured by any number of readily-available conveying units. There was also a lower hatch in the twenty-foot ISO container. This lower hatch could be opened to drain the proppant out of the twenty-foot ISO container. Alternatively, a square flow-gate was fabricated and welded to the vertical rear lower side of the twenty-foot container. This gate hatch allowed the container to be tilted in the manner of a dump truck bed. As a result, sand could flow out of the flow gate while moderating the flow of the sand.

This patent application provided the ability to trans-load sand via containers from a standard rail hopper car to the twenty-foot ISO container. It was determined that the container could be loaded in less than twenty minutes with at least forty-five tons of proppant. By pre-positioning the container along the rail track, movable conveyors could work the train from one end to the other and unload the train in a very efficient and timely manner. This part of the process eliminated the coordination efforts of calling in pneumatic trucks that could be systematically loaded by conveying units. This reduced the time necessary to unload a train's hopper cars by many hours. It also eliminated truck traffic and demurrage charges at the rail-spur and trans-load facility.

Once the proppant is loaded into the container, another piece of specialised equipment would be used to lift the full container and to stack the container upon other containers. The stackable arrangement of containers allows the ability to operate and store proppant within a very small footprint. The specialized equipment that was required to lift the full containers was so heavy and large that it would have to be disassembled into several pieces before moving from one location to another. This created some limitations on the flexibility that such equipment lent to the containerized process.

By "containerizing" proppant, it was found that an inventory management system could be added in order to provide real-time, accurate information pertaining to the volume/inventory of proppant that the customers own in a particular region. Currently, many proppant buyers are subject to inaccurate volume reporting from trans-loading facilities. As such, they may not be certain that the proppant being delivered to the well-site is, in fact, of the quality and grade that they have purchased. By applying an inventory management system, bar coding, and scanning the containers into and out of inventory, the customers would be assured that they have received their proppant and would be able streamline the procurement process when ordering more material.

In this prior process, since the twenty-foot ISO container needed to be emptied and trans-loaded into pneumatic trailers for delivery to the wellhead, a tilting unit was incorporated into the process. This tilting unit accepted the twenty-foot ISO containers. The tilting unit is able to lift one end of the container and create the required angle to wholly empty the container through the flow gate. Once tilted, the sand would spill onto the belt of the conveyor and rise vertically into a hopper. The hopper rested on a steel fabrication stand. This stand is high enough such that a truck that pulls a pneumatic trailer could drive under the stand and be gravity fed by the hopper so as to fill up the sand trailer. Theme "loading stations" could be replicated along a path so as to alleviate the bottleneck of trucks at a trans-load facility that has a limited number of conveyors available to load the trucks. Once again, trucking demurrage at this trans-load facility could be dramatically reduced through the process. The railcars can be off-loaded rapidly and released back to the railroads. This also reduced or eliminated demurrage fees charged by the railroads for rail hopper cars that stood waiting to be off-loaded.

This prior process created an inexpensive storage solution, improved the efficiencies of the trans-loading process, added inventory visibility and controls, and reduced both truck and rail demurrage charges. However, it did have several limitations. For example, the twenty-foot ISO container, while capable of handling ninety thousand pounds ofproppant, could not be transported legally over a public road. In most states, the maximum allowable total weight of a vehicle and its payload is eighty thousand pounds of gross vehicle weight in order to be considered a legal load. By law, any load that can be broken down by two units or more, in order to achieve a legal weight limit, must be divided into multiple loads. Since proppant is divisible, the law does not allow for heavy or over-weight loads.

The angle of repose of a granular material is the steepest angle of descent or dip of the slope relative to the horizontal plane when material on the slope face is on the verge of sliding. When bulk granular materials are poured onto a horizontal surface, a conical pile will form. The internal angle between the surface of the pile and the horizontal surface is known as the angle of repose and is related to the density, surface area and shape of the particles, and the coefficient of friction of the material. The angle of repose is also gravity-dependent.

When analysing the angle of repose of proppant poured into a twenty-foot ISO container, it was evident that much of the volume of such a container was void. Specifically, the upper ends of twenty-foot ISO container could not be utilized without somehow manipulating or tilting the container as it was filled by a conveyor. Moreover, when emptying the container, by way of the original bottom hatch, the proppant would pour directly out of the bottom and leave a significant amount of material sitting on the floor of the container.

U.S. Patent Application Serial No. 13/555,635, filed on July 23, 2012 by the present inventor, is the parent of the present application. U.S. Patent Application Serial No. 13/555,635 described a new generation of the container by taking the original twenty-foot ISO container and splitting it in half As such, a ten foot ISO container was provided. By breaking the container into a ten foot configuration, it was determined that such a container could hold approximately 45,000 - 48,000 pounds of proppant. More importantly, the total gross vehicle weight of such a fully-loaded container could be legally transported over a public road. This was a major breakthrough. The container could be delivered to the wellhead in advance of a frac crew and eliminate sand deliveries during the fracturing process. Because all of the required proppant for any frac job could be delivered and stored on-site, such a ten-foot ISO container effectively eliminated the occurrence of trucking demurrage charges at the well-site. Also, the use of such a ten-foot container effectively eliminated the problems caused by the angle of repose of the proppant and allowed the volumetric capacity of such a ten-foot ISO container to be more fully utilized. It was found to be the optimal configuration, size, and cost for the process.

This prior application utilized an insert that is fabricated and welded within the interior of the ten-foot ISO container. The insert allowed the proppant, loaded through the top hatch, to fully flow out of a newly designed bottom flow-gate. The need to manipulate or tilt the container was eliminated. This ten-foot container could now be filled and emptied by using only gravity to do so.

In the past, various patents have issued relating to storage and transport facilities. For example, U.S. Patent Publication No. 2008/0179054, published on July 31,2008 to McGough et al., shows a bulk material storage and transportation system. In particular, the storage system is mounted on the trailer of a truck. The storage system includes walls that define an interior volume suitable for receiving the aggregate material therein. There are hoppers provided at the bottom of the container. These hoppers have inclined walls. The hoppers can extend so as to allow the material from the inside of the container to be properly conveyed to a location exterior of the container. Actuators are used so as to expand and collapse the container.

U.S. Patent No. 7,240,681, issued on July 10, 2007 to L. Saik, describes a trailer-mounted mobile apparatus for dewatering and recovering formation sand. The trailer is mounted to a truck-towable trailer so as to receive sand therein. The container has a pair of sloping end walls. The back end of the container is suitably openable so as to allow the sand to be removed therefrom. A pneumatic or hydraulic ram is provided on the forward part of the container so as to allow the container to be lifted angularly upwardly so as to allow sand to be discharged through the gate at the rear of the container.

U.S. Patent No. 4,247,228, issued on January 27.1981 to Gray et al., describes a dump truck or trailer with a pneumatic conveyor. The container is mounted to a frame on wheels. A hydraulic ram tilts the container for dumping through a rear outlet. A pneumatic conveyor is carried by the frame with an intake at the rear of the container. A gate allows the solids to be dumped conventionally by gravity or to be blown to a storage facility by the pneumatic container. The container has a top hatch formed therein so as to allow the solids to be introduced into the interior of the container.

U.S. Patent No. 2,865,521, issued on December 23, 1958 to Fisher et al, shows a bulk material truck that has an interior volume suitable for the receipt of bulk material therein. A pneumatic conveyer is utilized so as to allow the removal of such material from the bottom of the container. A pair of sloping walls are provided on opposite sides of the container so as to allow the bulk materiat within the container to be passed toward the bottom of the container. A top hatch is provided on the top of the conveyer. The pneumatic conveyer is connected to the bottom of the container.

It is an object of the present invention to provide a supportapparatus for moving proppant that allows proppant to be easily discharged from a container positioned on the support apparatus.

It is another object of the present invention to provide a support apparatus that allows proppant from the container to be easily conveyed to a desired location.

It is a further object of the present invention to provide a support apparatus which allows proppant to be selectively discharged from a container positioned on the support apparatus.

It is a further object of the present invention to provide a support apparatus which allows proppant from the container to be properly metered during the discharging onto the conveyor.

It is still another object of the present invention to provide a support apparatus that maximizes the ability to control the flow of proppant from the container for the purposes of metering the proppant onto the conveyor.

It is still another object of the present invention to provide a support apparatus that facilitates the ability to easily place a container upon a surface of the support apparatus.

It is still another object of the present invention to provide a support apparatus for a proppant-containing container which can be easily transported to a desired location.

It is also a further object of the present invention to provide a support apparatus which minimizes the requirements of actuators associated with the metering of proppant onto the conveyor.

These and other objects and advantages of the present invention will become apparent from a reading of the attached specification and appended claims.

### BRIEF SUMMARY OF THE INVENTION

The present invention is a support for moving proppant from a container. The support apparatus comprises a frame having a surface for suitable for receiving a container thereon, a hopper affixed to the frame and having an opening at or adjacent to a lower end thereof, and a conveyor having a surface positioned below the opening of the hopper. The hopper is suitable for receiving proppant from the container. The surface of the conveyor is suitable for receiving the proppant from the hopper.

In the present invention, a receptacle is translatably positioned at the surface of the frame. An actuator is connected to the receptacle so as to move the receptacle between a first position and a second position. The first position is suitable for retaining the proppant in the container. The second position is suitable for discharging the proppant from the container into the hopper. The receptacle comprises a body having a slot opening at an upper end thereof. The body extends above the surface of the name. In the preferred embodiment of the present invention, the receptacle includes a first receptacle positioned adjacent one side of the frame and a second receptacle positioned adjacent an opposite side of the frame.

The hopper includes a first side wall, a second side wall, a first end wall and a second end wall. The first end wall and the second end wall extend between the first wall, and the second side wall. The first and second side walls and the first and second end walls converge toward the opening of the hopper. The opening of the hopper, in the preferred embodiment of the present invention, has an inverted V-shaped configuration. The opening of the hopper has a plurality of slots extending thereacross. A solid portion is formed between adjacent pairs of the plurality of slots.

A metering gate is translatably positloned adjacent to the opening of the hopper. An actuator is connected to the metering gate so as to move the metering gate between a closed position and an open position. The closed position is suitable for retaining the proppant in the hopper. The open position is suitable for selectively releasing proppant from the hopper. The metering gate also has an inverted V-shaped configuration that is in mating relationship with the inverted V-shaped opening of the hopper. The metering gate has a plurality of slots extending thereacross with adjacent pairs of the plurality of slots of the metering gate having a solid portion therebetween. The solid portions of the metering gate are aligned with the plurality of slots of the opening of the hopper when the metering gate is in the closed position. The plurality of slots of the metering gate are aligned with a plurality of slots of the opening of the hopper when the metering gate is in the open position.

The conveyor has a portion extending outwardly beyond an end of the frame. The conveyor is suitable for discharging the proppant to a location outwardly of the frame. This portion of the conveyor angles upwardly beyond the end of the frame. A chute is positioned adjacent an end of the conveyor. The chute is directable toward a desired location.

The frame has at least a pair of pin connectors extending upwardly from the surface of the frame. The pin connectors are suitable for engaging respective receptacles formed in the container. The frame has at least a pair of wheels mounted thereto. The pair of wheels are suitable for allowing the frame to move along an underlying surface. The frame also has a hitch at an end thereof. This hitch is suitable for connecting the frame to a vehicle.

This foregoing section is intended to describe, with particularity, the preferred embodiments of the present invention. It is understood that modifications to these preferred embodiments can be made within the scope of the present invention. As such" this section should not be construed, in any way, as limiting of the true scope of the present invention. The present invention should only be limited by the following claims and their legal equivalents,

### BRIEF DESCRIPTION OF THE DRAWINGS

FIGURE 1 is a perspective view of the container in accordance with the preferred embodiment of the present invention.
FIGURE 2 is a side elevational view of the container in accordance with the preferred embodiment of the present invention.
FIGURE 3 is a cross-sectional view showing the container of the preferred embodiment of the present invention.
FIGURE 4 is a plan view showing the interior of the container of the preferred embodiment of the present invention.
FIGURE 5 is an isolated end view showing the support structure of the system of the preferred embodiment of the present invention.
FIGURE 6 is a plan view of the support structure of the system of the present invention.
FIGURE 7 is an end view showing the placement of the container upon the support structure in accordance with the preferred embodiment of the system of the present invention.
FIGURE 8 is a side view of the container as place on the support structure in accordance with the preferred embodiment of the system of the present invention.
FIGURE 9 is a side elevitional view showing a plurality of containers as placed upon the a support structure in accordance with the system of the preferred embodiment of the present invention.
FIGURE 10 is a plan view showing a plurality of containers as placed upon the a support structure in accordance with the preferred embodiment of the system of the present invention.

### DETAILED DESCRIPTION OF THE INVENTION

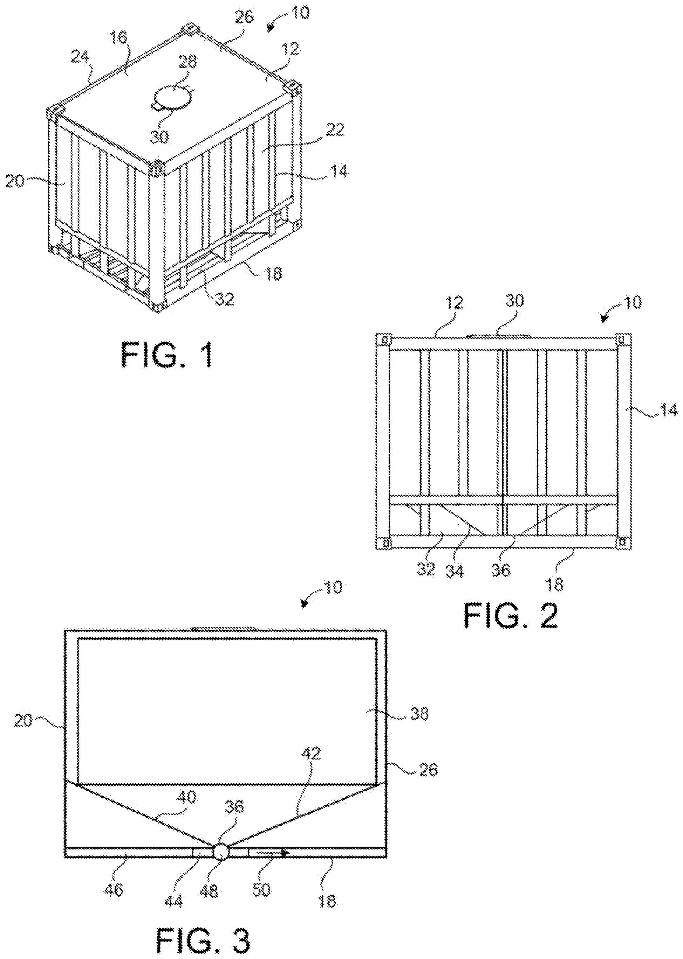

Referring to FIGURE 1, there is shown the container 10 in accordance with the preferred embodiment of the present invention. The container 10 is in the nature of a box 12 having an exterior frame 14. The box 12 includes a top 16, a bottom 18, an end wall 20 and a side wall 22. The side wall 24 is opposite to the side wall 22. There also an end wall 26 that is opposite to that of end wall 20. An inlet 28 is formed through the top 16 of the box 12. A hatch 30 is removably or hingedly affixed over the inlet 28 so as to allow proppant to be introduced into the interior volume of the container 10.

In FIGURE 1, it can be seen that the frame 14 extends generally around the exterior of the end walls 20 and 26 and over the side walls 22 and 24. As such, as Will be described hereinafter, there is a funnel-shaped bottom of the container that has exterior surfaces exposed through the frame 14. During the course of international shipment, it is important to avoid closed spaces within such a container. As such, the exposure of the surfaces through the openings 32 at the bottom of the frame 14 will allow inspectors to have visual access to the areas adjacent to this funnel-shaped area.

As can be seen in FIGURE 2, the container 10 is illustrated as having the top 16 and the bottom 18. The frame 14 provides structural a support for the container 10 and generally surrounds the exterior of the container. The frame is formed of a plurality of vertical bars that extend so as to form a cage-like configuration around the walls 20, 22, 24 and 26. The bottom 18 is generally of a planar shape so that the bottom 18 can be placed upon the support structure (to be described hereinafter). Importantly, the area 32 shows that the funnel-shaped portion 34 is exposed through the openings of the frame 14, As such, there will be no closed or sealed areas within the interior of the container 10. The hatch 30 is positioned over the inlet 28 at the top 16 of the container 10. As a result, the proppant can be introduced through the inlet 28 when the hatch 30 is opened so as to fill the interior volume of the container 10. The funnel-shaped area 34 defines an outlet 36 located at the bottom 18 of the container 10.

As can be seen in FIGURES 1 and 2, the container 10 is a ten-foot ISO container. In accordance with standard ISO terminology, this means that the container has a length often feet, a width of eight feet and a height of 8.5 feet. The height can also be 9.5 feet. This configuration allows between 43,000 and 48,000 pounds of proppant to be introduced into the interior volume of the container.

FIGURE 3 shows a partial cross-sectional view of the container 10. It can be seen that the container 10 has an interior volume 38. The outlet 36 is formed adjacent to the bottom 18 of the container 10, A first ramp 40 will extend from the end wall 20 to the outlet 36. A second ramp 42 will extend from the end wall 22 to the outlet 36. The ramps 40 and 42 will serve to funnel the proppant that is retained within the interior volume 38 of the container 10 toward the outlet 36. Importantly, a gate 44 is positioned within a track 46 located at the bottom 18 of the container 10. The gate 44 is in the nature of flat plate which, as shown in FIGURE 3, covers the outlet 36. The gate 44 includes a pin 48 (in the nature of king bolt) that extends outwardly from the gate 44. When an actuator is connected to the pin 48, it can move the gate 44 from the position closing the outlet 36 to a position opening the outlet 36. Arrow 50 shows the movement of the gate 44 between these positions. Since the gate 44 has a width that generally corresponds to the size of the outlet 36, the gate 44 will only need to move for a small amount of travel so as to move the gate 44 to the open position.

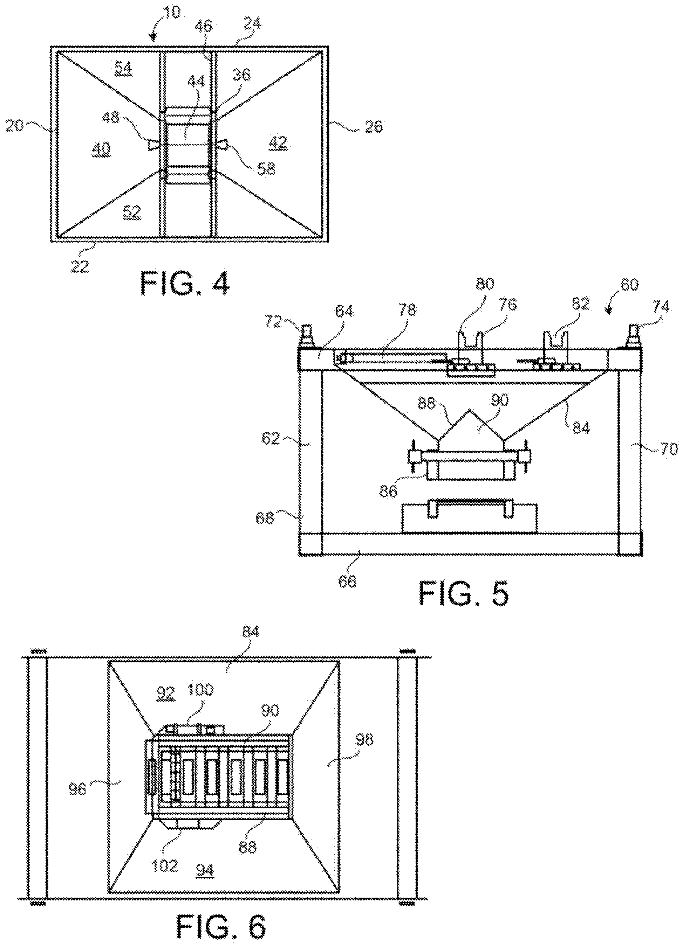

FIGURE 4 is an interior view of the container 10. As can be seen, the first ramp 40 will extend from the end wall 20 to the outlet 36. The second ramp 42 extends from the end wall 26 to the outlet 36. A third ramp 52 will extend from the side wall 22 to the outlet 36. Another ramp 54 will extend from the side wall 24 to the outlet 36. As such, the ramps 40, 42, 52 and 54 form the funnel-like shape so that the proppant that is received within the interior volume 38 of the container 10 can flow free downwardly toward the outlet 36.

In FIGURE 4, it can be seen that the gate 44 is positioned within the track 46. FIGURE 4 shows the gate 44 in its closed position. An actuator can be used so as to move the gate 44 from the position shown in FIGURE 4 in a direction toward either the side wall 22 or the side wall 24. Pins 48 and 58 are illustrated as extending outwardly of the sides of the gate 44, As such, a suitable actuator, such as a hydraulic piston-and-cylinder arrangement, can be connected to these pins 48 and/or 50 so as to achieve the requisite movement of the gate 44 from the closed position to the open position,

FIGURE 5 is an end view showing the support structure 60 as used in the proppant discharge system of the present invention. The support structure 60 has a frame 62 which forms a top surface 64, a bottom surface 66, and sides 68 and 70. The top 64 of the frame 62 has a surface upon which the container 10 can be placed. Suitable pin connections 72 and 74 extend upwardly from the top surface 64 so as to engage corresponding receptacles on the container 10. These pins 72 and 74 can be utilized so as to assure that the container 10 is properly positioned upon the support structure 60.

A receptacle 76 is positioned at or adjacent to the top surface 64. The actuator 78 is affixed to the frame 62 and extends to the receptacle 76. As can be seen, the receptacle 76 has a slot formed in the top end thereof The slot of the receptacle 76 is suitable for receiving one of the pins 48 and 58 of the gate 44 of the container 10. Once the receptacle 76 receives the pin 48 therein, the actuator 78 can be actuated so as to move the receptacle (and its received pin) from the first position 80 to a second position 82. When the receptacle 82 (along with the pin received therein) is moved to the second position 82, the gate 44 will be opened so that the proppant can be discharged through the outlet 36 of the container 10. Since pins 48 and 58 are symmetrically placed, and since the container 10 is rather symmetrical, the support structure 60 is particularly adapted to the variety of orientations with the container 10 can be placed upon the top surface 64.

In FIGURE 5, it can be seen that there is a hopper 84 that is positioned below the top surface 64. Hopper 84 serves to receive a portion of the proppant as discharged through the outlet 36 of the container 10 when the gate 44 is in the open position. As such, the hopper 84 can be utilized so as to properly meter the proppant onto the conveyor 86. Conveyor 86 is located below the opening 88 of the hopper 84.

As can be seen in FIGURE 5, hopper 84 has an opening 88 of a generally inverted V-shaped configuration. There is a metering gate 90 that is mated with the opening 88 and also has a V-shaped configuration. The metering gate 90 can be moved a small distance so as to allow for the selected and controlled discharge of proppant from the hopper 84 onto the conveyor 86.

FIGURE 6 shows the interior of the hopper 84. Hopper 84 includes side walls 92 and 94 and end walls 96 and 98. The walls 92, 94, 96 and 98 are formed into a funnel-like shape so as to move the proppant downwardly toward the metering gate 90. In FIGURE 6, it can be seen that the opening 88 of the hopper 84 has a plurality of slots formed therein. Similarly, the metering gate 90 has a plurality of slots formed therethrough. The structures between the slots is solid. As such, when the slots of the metering gate 90 are aligned with the slots of the opening 88, then proppant can be discharged onto the underlying conveyor 86. A small movement of the metering gate 90 in one direction or another, will block the flow of the proppant through the slots of the opening 88 of hopper 84. As such, very small actuators 100 and 102 can be used so as to achieve the proper metering of the proppant onto the conveyor. If a small flow rate of proppant is desired, then the actuators 100 and 102 will move the metering gate 90 only a small distance. If a greater flow rate is required, then the actuators 100 and 102 will move the metering gate 90 so that the slots of the metering gate 90 fully correspond with the slots of the opening 88 so as to achieve a maximum flow of proppant from the hopper 84 down to the conveyor.

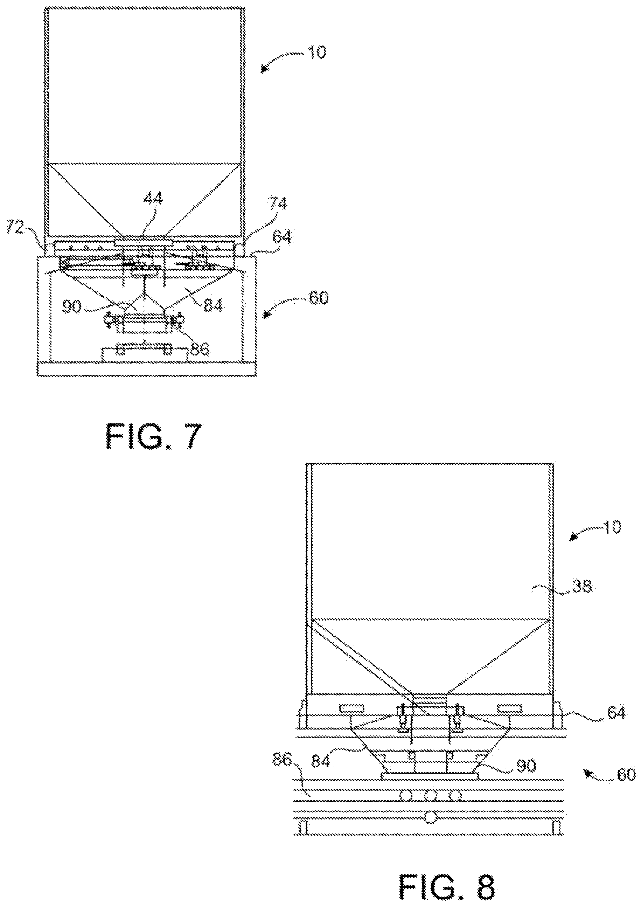

FIGURE 7 shows the container 10 as placed upon the top surface 64 of the support structure 60. In normal use, a forklift can be utilized so as to properly position the container 10 in a proper position upon the pins 72 and 74 of the support structure 60. Initially, the gate 44 of the container 10 will be closed. Additionally, the metering gate 90 can also be closed. When the container 10 is properly positioned, the gate 44 can be moved to an open position so that the proppant is discharged into the hopper 84. The hopper 84 can then be filled with proppant. When it is desired to move the proppant from the hopper 84, along the conveyor, to the desired destination, then the metering gate 90 can be opened so as to achieve the desired flow rate of proppant through the opening 88 of the hopper 84.

FIGURE 8 shows a side view in which the container 10 is placed upon the top surface 64 of the support structure 60. The conveyor 86 is illustrated as extending longitudinally. As such, when the proppant passes through the metering gate 90 associated with the hopper 84, any proppant within the interior volume 38 of the container 10 can be delivered, in a controlled manner, onto the conveyor.

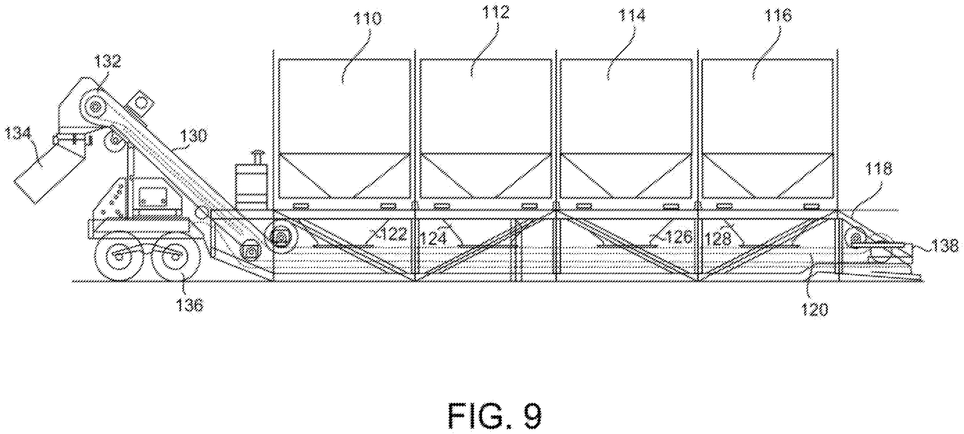

FIGURE 9 is an illustration of containers 110, 112, 114 and 116 as placed upon the support structure 118. The support structure 118 has a sufficient length so as to accommodate the containers 110, 112, 114 and 116. It can be seen that the conveyor 120 is arranged beneath the top surface of the support structure 118 and below the respective hoppers 122, 124, 126 and 128 below the respective containers 110, 112, 114 and 116. The conveyor 120 is an endless conveyor that is suitably wound around sheaves and idlers so as to travel a desired path. The proppant that is discharged from the containers 110, 112, 114 and 116 is discharged onto the conveyor 120 so as to travel therealong and along upwardly extending section 130. The end 132 of the conveyor 120 will open to a chute 134. The chute 134 can be directed toward the desire purposes at the fracturing site. As such, the array of containers 110, 112, 114 and 116 can be configured so as to replace existing storage facilities at the fracturing site. The support structure 118, along with the conveyor 120, can be easily transportable by a truck upon a roadway because of the use of the wheels 136. The forward end 138 can be suitably connected to a truck so as to allow for the easy transport of the system of the present invention.

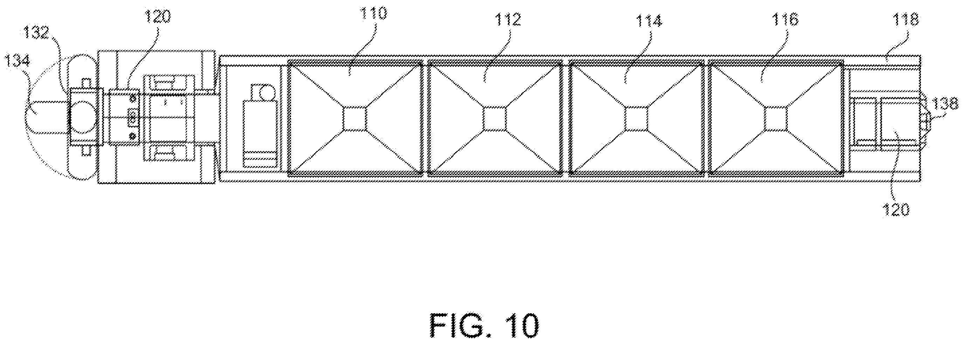

FIGURE 10 illustrates the placement of the containers 110, 112, 114 and 116 upon the support structure 118. The end 138 includes a suitable hitch connection for attachment to a truck. The conveyor 120 extends below the containers 110, 112, 114 and 116 so as to deliver the proppant to the chute 134. FIGURE 10 illustrates that the chute 134 is suitably pivotable in cooperation with the end 132 of the conveyor 120 so as to allow for the controlled and directed discharge of the proppant to the desired location.

The container 10 of the present invention is manufactured as a single unit. The gate 44 of the container 10 is specifically engineered to align with the actuator 70 located on the conveying system. The actuator is hydraulically controlled and accepts the pin 48 which is attached to the gate 44. When the actuator 70 is activated, the gate 44 moves horizontally so as to allow for the discharge of proppant therefrom.

The container of the present invention can be specifically applied for transport via rail. In particular, the railcar can be designed so as to accommodate up to four containers 10. As such, the railcar can carry approximately 180,000 pounds of proppant when the four containers are placed on the railcar. The railcar can be similar to current inter-modal railcars that carry twenty foot, forty foot and fifty-three foot inter-modal containers. The railcar could include typical inter-modal load-locks which are evenly spaced down to chassis of the railcar. The container should be constructed of materials wide enough to keep the overall loaded weight of the container under currently regulated railroad weight guidelines. Additionally, it must be strong enough to bear the load of the loaded containers. This development allows sand mines to load proppant directly into a container 10 in order to speed up the loading process. It also eliminates the need to build a silo storage at the mine site. Once the container arrives at its designated location or region, trans-load processes to pneumatic trailers, silos or flat storage, are thus eliminated.

The present invention is an improved delivery system that can be used at the well- site. The support structure 60 includes a fabricated steel frame upon which multiple containers can be positioned. The containers lock into receptacles that secure the containers to the frame. The container will then sit above a conveying system that delivers the proppant from the container as the gate is opened to a master-conveying belt. The cradle is outfitted with a hydraulic system which can control the opening and closing of the gates. The containers of the present invention can be combined as an attachment or cartridge compatibly with existing devices known as SAND KINGS (TM), SAND CHIEFS (TM) and SAND DRAGONS (TM). By replacing existing hoppers on these devices with the removable container of the present invention, even greater efficiencies can be attained in the proppant delivery process.

The conveying system of the present invention is an alternative method of delivering proppant from the container to the blender belt for the mixing unit once delivered to the well-site. The conveying system of the present invention provides all of the functionality commonly seen in the SAND MASTER (TM), SAND KING (TM), SAND DRAGON (TM), SAND MOVE (TM), etc. As such, the present invention allows the flow of sand to be metered onto the conveyor belt through a hydraulic system of flow gates. The container is first lifted into position onto the support structure. The bottom flow gate is received by the receptacle of the hydraulic actuator so as to create a lock between the pin of the gate and the hydraulic system. The hydraulic system then opens the flow gate and the proppant so as to gravity-feed into a hopper located on the support structure. Another set of flow gates associated with the hopper system are then opened by way of another hydraulic system. This allows the proppant to be metered and to flow onto a conveyor belt. The conveyor belt can then deliver the proppant to the blender or the T-Beit. The proppant can then be mixed with other materials in the blender.

Currently, expensive pneumatic bulk trucks are utilized in the delivery of proppant to a well-site. Once on-site, the trucker employs a power take-off unit to "blow" the sand into the sand storage devices. This delivery often takes over one (1) hour to complete. By delivering sand to the well in the ten-foot containers of the present invention, the use of expensive pieces of specialized equipment are eliminated. The container can ride on a standard flatbed, step-deck, low-boy, or other more commonly-used trailer. As such, the process of the present invention is able to tap into a much larger universe of available trucking capacity. This can reduce the transportation costs to the well. While pneumatic trailer deliveries are priced in "round trip" miles, the delivery of the container of the present invention by a more common piece of equipment (capable of getting a "back-haul") significantly reduces the overall transportation cost. As an example, there is a great need for parts, tools and other wellhead equipment to be taken off the well-site for repair or return to a manufacturer or rental company. The flatbed trailer, now empty, has the ability to accept that load while it is on-site rather than calling in another trucking company to provide that service. The reduced need for "hot-shot" service is another significant value to the service company and ultimately the exploration and production company.

In terms of returning empty containers to the sand distribution facilities, a total of four (4) empty container can be returned by a single flatbed trailer. This provides a 4:1 level of efficiency in removing the container from the well-site Additionally, a forty foot container chassis will be used in the movement of both empty and full containers, The support structure, just like the containers, can be delivered to the well-site by a typical flatbed truck. The support structure could be towed via truck to the site in manner similar to any other trailer.

Another important advantage to the present invention is the small footprint that the ten-foot ISO containers of the present invention occupy relative to the capacity of sand that they can store. When the containers are stacked three high, the containers can store approximately 135,000 pounds in a footprint of eighty square feet. The available space at the wellhead, and in potential proppant trans-loading facilities, can be extremely limited. As such, the process of the present invention minimizes the footprint that is required for a given amount of proppant at such a location.

Since environmental and safety concerns surrounding well-site operations is becoming an increasing concern, the present invention minimizes the amount of particulate matter that is released into the air. Proppant is currently delivered to the frac site via pneumatic trailers. Pneumatic pressure is used to pressurize the trailer and then "blow" the material into a sand storage unit. This process creates an immense amount of particulate matter than can then be inhaled by personnel at the frac-site. Additionally, while blowing the sand into the sand storage facility, the sand storage facility must vent the pressurized air to the atmosphere. This creates an even greater exposure to particulate matter. The constantneed to take delivery ofproppant on-site creates a constant environment of dust and small particles in the air. Since the present invention eliminatespneumatic deliveries, the process of the present invention significantly reduces the amount ofparticulate matter on the frac-site. The gravity-feed delivery method from the container to the blender greatly improves the safety of well-site personnel.

The present invention also serves to reduce trucking emissions by reducing the amount of trucks that are being used or waisting. The safety at the wellhead is improved by reducing such truck traffic.

The foregoing disclosure and description of the invention is illustrative and explanatory thereof Various changes in the details of the illustrated construction, or in the steps of the described method, can be made within the scope of the present invention without departing from the true spirit of the invention. The present invention should only be limited by the following claims and their legal equivalents.

The invention is also embodied in the following clauses:
1. An apparatus for moving proppant from a container, the apparatus comprising:
   a frame having a surface for suitable for receiving a container thereon;
   a hopper affixed to said frame, said hopper having an opening at or adjacent to a lower end thereof, said hopper suitable for receiving proppant from the container; and
   a conveyor having a surface positioned below said opening of said hopper, said surface of said conveyor suitable for receiving the proppant from said hopper.
2. The apparatus of Clause 1, further comprising:
   a receptacle translatably positioned at or adjacent to said surface of said frame; and an actuator connected to said receptacle so as to move said receptacle between a first position and a second position, said first position suitable for retaining the proppant in the container, said second position suitable for discharging the proppant from the container into said hopper.
3. The apparatus of Clause 2, said receptacle, comprising a body having a slot opening at an upper end thereof, said body extending above said surface of said frame.
4. The apparatus of Clause 2, said receptacle comprising:
   a first receptacle positioned adjacent one side of said frame; and
   a second receptacle positioned adjacent an opposite side of said frame.
5. The apparatus of Clause 1, said hopper comprising a first side wall and a second side wall and a first end wall and a second end wall, said first end wall and said second end wall extending between said first side wall and said second side wall, said first and second side walls and said first and second end walls converging toward said opening of said hopper.
6. The apparatus of Clause 1, said opening of said hopper having an inverted V-shaped configuration.
7. The apparatus of Clause 6, said opening of said hopper having a plurality of slots extending thereacross, adjacent pairs of said plurality of slots having a solid portion formed therebetween.
8. The apparatus of Clause 1, further comprising:
   a metering gate translatably positioned adjacent to said opening of said hopper; and
   an actuator connected to said metering gate so as to move said metering gate between a closed position and an open position, said closed position suitable for retaining the proppant in said hopper, said open position suitable for selectively releasing proppant from said hopper.
9. The apparatus of Clause 8, said opening of said hopper having an inverted V-shaped configuration, said metering gate having an inverted V-shaped configuration in mating relationship with said opening of said hopper.
10. The apparatus of Clause 9, said opening of said hopper having a plurality of slots extending thereacross, adjacent pairs of said plurality of slots having a solid portion therebetween, said metering gate having a plurality of slots extending thereacross with adjacent pairs of said plurality of slots of said metering gate having a solid portion therebetween, the solid portions of said metering gate being aligned with said plurality of slots of said opening of said hopper when said metering gate is in said closed position, said plurality of slots of said metering gate aligned with a plurality of slots of said opening of said hopper when said metering gate is in said open position.
11. The apparatus of Clause 1, said conveyor having a portion extending outwardly beyond an end of said frame, said conveyor suitable for discharging the proppant to a location outwardly of said frame.
12. The apparatus of Clause 11, said portion of said conveyor angling upwardly beyond said end of said frame.
13. The apparatus of Clause 11, further comprising:
   a chute positioned adjacent an end of said conveyor, said chute being directable toward a desired location.
14. The apparatus of Clause 1, said frame having at least a pair of pin connectors extending upwardly from said surface of said frame, the pin connectors suitable for engaging respective receptacles formed in the container.
15. The apparatus of Clause 1, said frame having at least a pair of wheels mounted thereto, the pair of wheels suitable for allowing said frame to move along an underlying surface.
16. The apparatus of Clause 1, said frame having a hitch at an end thereof, said hitch suitable for connecting a frame to a vehicle.
17. An apparatus for moving proppant from a container, the apparatus comprising:
   a frame having a surface for suitable for receiving a container thereon;
   a hopper affixed to said frame, said hopper having an opening at or adjacent to a lower end thereof, said hopper suitable for receiving proppant from the container;
   a conveyor having a surface positioned below said opening of said hopper, said surface of said conveyor suitable for receiving the proppant from said hopper;
   a receptacle translatably positioned at said surface of said frame; and an actuator connected to said receptacle so as to move said receptacle between a first position and a second position, said first position suitable for retaining the proppant in the container, said second position suitable for discharging the proppant from the container into said hopper.
18. The apparatus of Clause 17, further comprising:
   a metering gate translatably positioned adjacent to said opening of said hopper; and another actuator connected to said metering gate so as to move said metering gate between a closed position and an open position, said closed position suitable for retaining the proppant in said hopper, said open position suitable for selectively releasing proppant from said hopper.
19. An apparatus for moving proppant from a container, the apparatus comprising:
   a frame having a surface for suitable for receiving a container thereon;
   a hopper affixed to said frame, said hopper having an opening at or adjacent to a lower end thereof, said hopper suitable for receiving proppant from the container;
   a conveyor having a surface positioned below said opening of said hopper, said surface of said conveyor suitable for receiving the proppant from said hopper;
   a metering gate translatably positioned adjacent to said opening of said hopper; and
   an actuator connected to said metering gate so as to move said metering gate between a closed position and an open position, said closed position suitable for retaining the proppant in said hopper, said open position suitable for selectively releasing proppant from said hopper.
20. The apparatus of Clause 19, said opening of said hopper having a plurality of slots extending thereacross, adjacent pairs of said plurality of slots having a solid portion therebetween, said metering gate having a plurality of slots extending thereacross with adjacent pairs of said plurality of slots of said metering gate having a solid portion therebetween, the solid portions of said metering gate being aligned with said plurality of slots of said opening of said hopper when said metering gate is in said closed position, said plurality of slots of said metering gate being aligned with a plurality of slots of said opening of said hopper when said metering gate is in said open position.

## Claims

1. A system to move large amounts of proppant from a plurality of containers (10), the system comprising:
a support structure (118) comprising a frame (62) having a surface positioned to receive and support a plurality of containers (10) so as to overlie a conveyor (120), wherein each container (10) of the plurality of containers (10) contains:
an interior volume (38) to receive and retain proppant therein;
walls (20, 22, 24, 26) defining a lateral periphery of the interior volume (38);
one or more support braces positioned proximate the walls (20, 22, 24, 26) and generally surrounding the exterior of the container (10) in a cage-like configuration, the one or more support braces being positioned to provide structural support to the walls (20, 22, 24, 26) when proppant is positioned in the interior volume;
a bottom (18) positioned on the surface (64) of the frame (62) and having an outlet (36) associated therewith;
ramps (40, 42, 52, 54) downwardly inclined and extending inwardly from the walls (20, 22, 24, 26) to direct the proppant toward the outlet (36), the ramps (40, 42, 52, 54) being supported by ramp supports connected to the ramps (40, 42, 52, 54) and positioned adjacent the ramps (40, 42, 52, 54) and the bottom (18); and
a gate (44) positioned proximate the outlet (36), the gate (44) being moveable between open and closed positions; and
a chute (140) that receives the proppant from the plurality of containers, the chute (140) being directable toward a desired location.

2. The system of claim 1, comprising:
a receptacle (76) translatably positioned adjacent the surface of the frame (62); and
an actuator (78) engaging the receptacle (76) to move the receptacle (76) between a first position (80) and a second position (82), such that the proppant is not discharged from the outlet (36) when the receptacle is in the first position (80) and the proppant is discharged from the outlet (36) when the receptacle is in the second position (82).

3. The system of claim 1, comprising openings (32) in a frame (14) positioned peripherally about the ramps (40, 42, 52, 54) such that exterior surfaces of the ramps (40, 42, 52, 54) are visible through the openings (32).

4. The system of claim 1, comprising:
one or more hoppers (84) associated with the frame (62) and positioned to underlie the plurality of containers when positioned on the frame (62) and to receive proppant when flowing from one or more of the plurality of containers, each of the plurality of hoppers (84) having an opening (88) at a lower end of the hopper (84) to discharge proppant received from the outlet (36) of the plurality of containers (10); and

5. The system of claim 4, comprising:
a metering gate (90) translatably positioned adjacent the opening (88) of the one or more hoppers (84); and
an actuator (78) connected to the metering gate (90) to move the metering gate (90) between an open position and a closed position, in which a flow rate of the proppant from the one or more hoppers (84) is controlled by the movement of the metering gate (90) between the open and closed positions.

6. The system of claim 1, wherein each container (10) of the plurality of containers (10) comprises a top substantially rectangular section positioned at a higher vertical elevation than the ramps (40, 42, 52, 54), the ramps (40, 42, 52, 54) being structurally strengthened by a plurality of lower supports.

7. The system of claim 1, further comprising a conveyor (120) having a surface positioned below the outlet (36) of the plurality of containers (10), the surface of the conveyor (120) being positioned to receive the proppant from each container (10) of the plurality of containers (10) to convey the proppant when positioned thereon away from the plurality of containers (10).

8. The system of claim 7, wherein the conveyor (120) comprises a path extending beyond the one or more containers (10) to move the proppant toward a fracturing site, an upwardly extending section (130), and the chute (140) is coupled to the path and receives the proppant therefrom.

9. The system of claim 1, wherein a respective frame (14) of the plurality of containers (10) comprises a plurality of vertical members positioned at intersections of the sidewalls (20, 22, 24, 26) and horizontal members positioned along peripheries of a top (16) and the bottom (18), the horizontal members abutting the vertical members.

10. A method of transporting large amounts of proppant, the method comprising:
positioning one or more structurally supported proppant containers (10) having an outlet (36) in each of the one or more containers (10) on a separate support structure (118) having a plurality of mounting locations arranged along a length of the separate support structure (118) when the separate support structure (118) is positioned at a fracturing site, the separate support structure (118) being spaced apart from and above a surface to direct the large amounts of proppant away from the one or more containers (10) when the large amounts of proppant is gravity-fed from the one or more containers (10), through the separate support structure (118) and onto the surface;
moving a gate (44), via an actuator, positioned proximate at least one of the outlets (36) of the one or more containers (10) between an open position and a closed position to enable the large amounts of proppant to discharge from the container (10) and onto the surface, the proppant flowing along one or more ramps (40, 42, 52, 54) that funnel the large amounts of proppant toward the outlets of the one or more containers (10), the ramps (40, 42, 52, 54) extending from the walls (20, 22, 24, 26) of the one or more containers (10) to the outlet (36) and being supported by one or more ramp supports;
receiving the proppant on the surface, a top surface (64) of the support structure (118) being arranged between the one or more containers (10) and the surface to enable loading, emptying, and removal of individual containers (10) of the one or more containers (10) in a continuous loading and emptying operation of the remaining containers (10) of the one or more containers (10);
positioning the plurality of containers (10) in a corresponding side-by-side configuration to align the corresponding containers (10) of the one or more containers (10) within cradles arranged on the support structure (118) along a portion of a length of the support structure (118); and
transporting the large amounts of proppant along the surface to a well site in close proximately to a fracturing site.

11. The method of claim 10, comprising locking the one or more containers (10) into receptacles that secure the one or more containers (10) to the support structure (118).

12. The method of claim 10, comprising positioning a metering gate (90) proximate an opening (88) of a plurality of hoppers (84), the metering gate (90) being moveable between an open position and closed position via one or more actuators (100, 102) to enable the large amounts of proppant to discharge from the hopper (84) and onto the surface when the metering gate (90) is in the open position.

13. The method of claim 10, comprising a plurality of hoppers (84) positioned between the one or more containers (10) and a conveyor (120), the top surface (64) of the support structure (118) being arranged between the one or more containers (10) and the plurality of hoppers (84) each hopper (84) of the plurality of hoppers (84) aligned with a corresponding overlying container (10) of the one or more containers (10).

14. The method of claim 10, comprising:
dispensing the large amounts of proppant from a first container (10) of the one or more containers (10) onto the conveyor (120);
emptying the large amounts of proppant from the first container (10);
dispensing the large amounts of proppant from a second container (10) of the one or more containers (10); and
removing the first container (10) from the support structure (118) as the large amounts of proppant is dispensed from the second container (18).

15. The method of claim 10, wherein the surface comprises a conveyor (120) and the method further comprises conveying the large amounts of proppant on the conveyor (120) away from the one or more containers (10), the conveyor (120) conveying the large amounts of proppant along an upwardly extending section (130) and into a chute (140) located at an end of the conveyor (140) and further toward a desired location at the fracturing site.
